# EUROPEAN PATENT APPLICATION

(11) **EP 1 857 718 A2**
(43) Date of publication of application: **21.11.2007**
(21) Application number: 07107310.0
(22) Date of filing: 02.05.2007
(51) Int. Cl.: F16J 15/34

(54) **Dynamic mechanical seal**

(30) Priority: 15.05.2006 IT PD20060192
(71) Applicant: Sealtek S.R.L., 35010 Vigonza PD (IT)
(72) Inventor: Bidoia, Sandro, 30030 Pianiga (VE) (IT); Miccini, Stefano, 35027 Noventa Padovana (PD) (IT)
(74) Representative: Modiano, Micaela Nadia

(57) **Abstract**

A dynamic mechanical seal, comprising two annular sealing elements (11, 12) which are pressed against each other and are in contact by means of two corresponding faces (13, 14), a first static annular sealing element (11), directed toward a stuffing box of the machine body with which the mechanical seal is associated and forming a stationary face (13) rigidly coupled to a supporting flange (15), and a second rotating annular sealing element (12), which forms a rotating face (14) and is rigidly coupled to an external annular element (16), which in turn is fixed to a rotating shaft (17) and is externally adjacent to the flange (15) and to the machine body with which the mechanical seal is associated, the first annular sealing element (11) having a substantially frustum-shaped internal annular surface (18) which faces the rotating shaft (17), with a radius which is greater on the side of the stuffing box and a radius which is smaller proximate to the second adjacent annular sealing element (12), the frustum-shaped surface (18) forming a region for the recirculation of fluid inside the stuffing box away from the two annular sealing elements (11, 12).

## Description

The present invention relates to a dynamic mechanical seal.

Mechanical seals are currently known which are constituted by two annular sealing elements which are pressed against each other and are in contact by means of two corresponding faces: a first annular sealing element, which forms the stationary face and is rigidly coupled to a supporting flange, and a second annular sealing element, which forms the rotating face and is rigidly coupled on the side of the stuffing box to a substantially tubular bush which is contoured so as to pass through the flange, surrounding the rotating shaft that exits from the body of the machine (a pump, mixer, or other compartments containing fluids, powders and the like).

Such bush is rigidly coupled to the shaft by means of an external annular element, which is fixed to the shaft and to the bush on the opposite side of the second annular sealing element, which rotates with respect to the flange, i.e., outside the body of the machine with which the mechanical seal is associated.

The external annular element is fixed temporarily to the flange during the fitting of the seal to the machine body and is rigidly fixed to the shaft and to the bush by means of a plurality of grub screws which are screwed in a radial direction so as to engage the interior of respective radial threaded holes in the outer annular element, so as to push against the shaft.

The couplings that keep the outer annular element fixed to the flange are removed at the end of the fitting of the mechanical seal, so that said outer annular element is free to rotate with the bush and the shaft.

Therefore, the bush is the component that holds the seal together by means of the flange, being shaped by the part that lies inside the stuffing box in order to contain the rotating sealing annular element, and at the opposite end, which is external to the flange, in order to be fixed to the outer annular body.

Said bush is in itself a very expensive element, since it is a steel monobloc, and entails a certain radial and axial space occupation.

Moreover, the bush is shaped so that the annular rotating sealing element is inserted in its seat on the bush by interposing a first O-ring.

The static sealing annular element is pressed against the rotating sealing annular element by a plurality of springs, which are arranged so as to push between the flange and the static sealing annular element; said static sealing element is therefore free to perform small movements in an axial direction, and a second O-ring is interposed between it and the flange and also protects the springs against the fluid and dirt that arrives from the stuffing box.

The shape of the bush, of the annular sealing elements and of the respective seats do not prevent the dirt carried by the fluid inside the stuffing box from accumulating in the interstices between the annular sealing elements and the respective seats, and against the O-rings; this event severely compromises the efficiency of the mechanical seal and limits the ability of the seal to adapt to vibrations both in a radial direction and an axial direction of the shaft, since these interstices and the contact mediated only by the O-rings between the annular sealing elements and their seats is indeed what allows a certain degree of adaptability of the seal to the vibrations of the rotating shaft.

The aim of the present invention is to provide a mechanical seal which solves the drawbacks of known mechanical seals.

Within this aim, an object of the present invention is to provide a mechanical seal which is more compact both axially and radially and is simpler to provide even on stuffing boxes which are in use and are not appropriately shaped complementarily.

Another object of the present invention is to provide a mechanical seal which is capable of keeping unchanged the qualities of adaptability to radial and axial vibrations of the shaft.

Another object of the present invention is to provide a mechanical seal whose efficiency, effectiveness and duration are not lower than those of known types of seal.

Another object of the present invention is to provide a mechanical seal which is structurally more simple, can be manufactured at lower costs with respect to known seals and can also be produced cheaply with known systems and technologies.

This aim and these and other objects, which will become better apparent hereinafter, are achieved by a dynamic mechanical seal, characterized in that it comprises two annular sealing elements which are pressed against each other and are in contact by means of two corresponding faces, a first static annular sealing element, which forms a stationary face and is directed toward a stuffing box of the body of the machine with which the mechanical seal is associated, said first annular element being rigidly coupled to a supporting flange, and a second rotating annular sealing element, which forms a rotating sealing face, which is rigidly coupled to an external annular element, which in turn is fixed to the rotating shaft and is arranged externally and adjacent to the flange and to the body of the machine with which the mechanical seal is associated, said first annular sealing element having an internal annular surface, which faces the rotating shaft, which is substantially frustum-shaped, with a radius which is greater on the side of the stuffing box and a radius which is smaller proximate to the second adjacent annular sealing element, said frustum-shaped surface being adapted to form a region for the recirculation of fluid inside a stuffing box away from said two annular sealing elements.

Further characteristics and advantages of the invention will become better apparent from the following detailed description of a preferred but not exclusive embodiment thereof, illustrated by way of non-limiting example in the accompanying drawings, wherein:

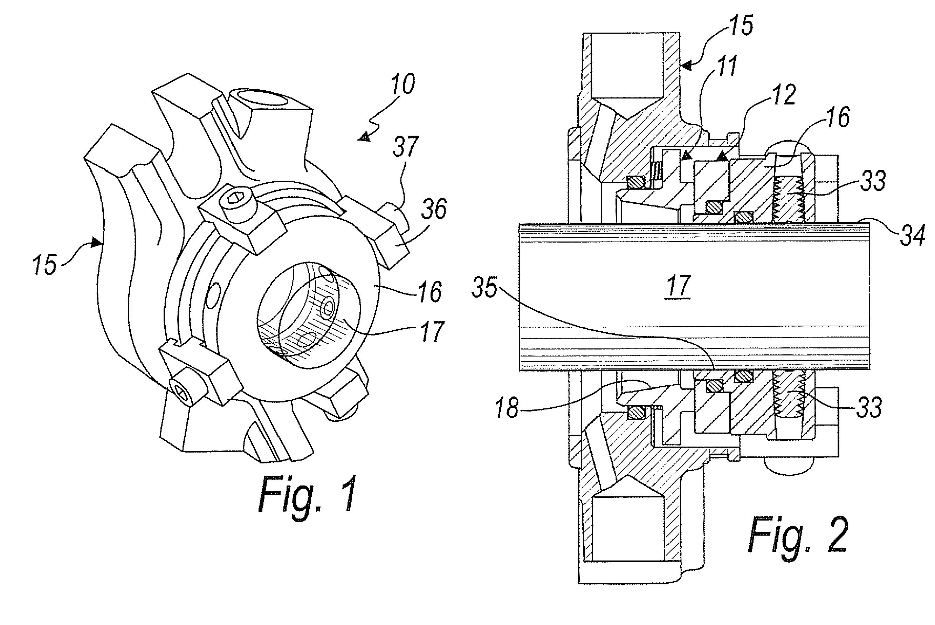

Figure 1 is a perspective view of a mechanical seal according to the invention;
Figure 2 is a sectional side view of the seal according to the invention;

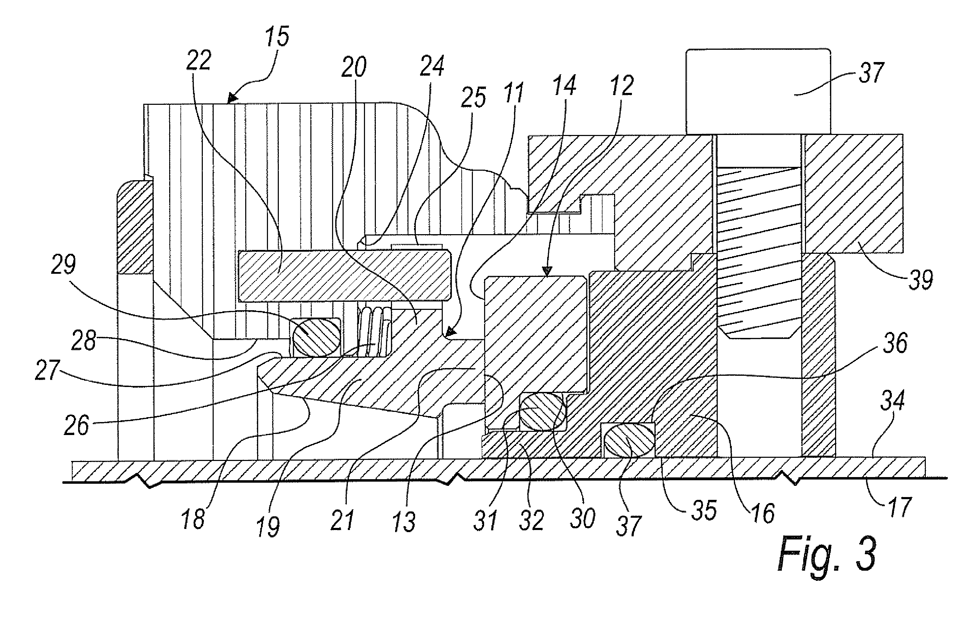

Figure 3 is another different sectional side view of a seal according to the invention;

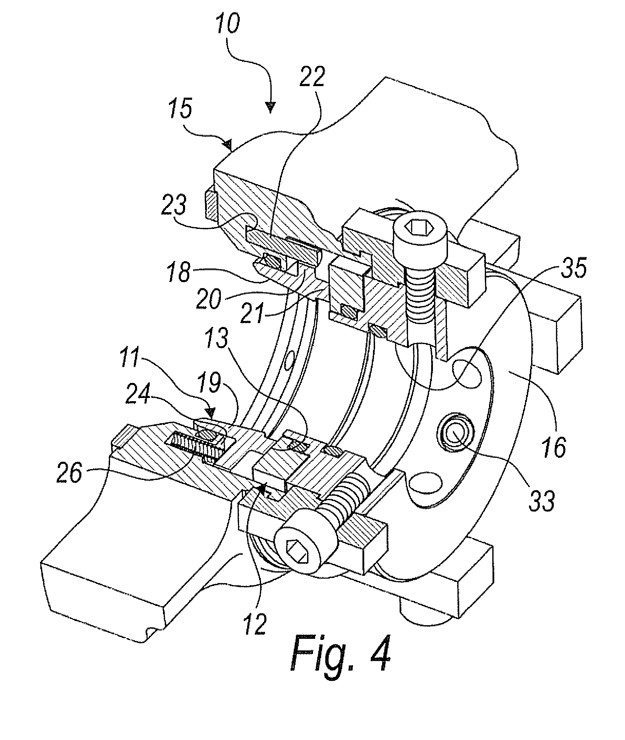

Figure 4 is a partially sectional perspective view of a seal according to the invention.

With reference to the figures, a mechanical seal according to the invention is generally designated by the reference numeral 10.

The seal 10 comprises two annular sealing elements 11 and 12, which are pressed against each other and are in contact by means of two corresponding faces 13 and 14.

A first static annular sealing element 11, which forms the stationary face 13, is rigidly coupled to a supporting flange 15, while a second rotating annular sealing element 12, which forms the rotating face 14, is rigidly coupled to an outer annular element 16, which in turn is fixed to a rotating shaft 17 and is externally adjacent to the flange 15 and to the body of the machine with which the mechanical seal is associated.

The first annular sealing element 11 has an internal annular surface 18 which faces the rotating shaft 17 and is substantially frustum-shaped, with a larger radius on the side of the stuffing box and a smaller radius proximate to the second adjacent annular sealing element 12.

The frustum-shaped surface 18 forms a region for the recirculation of fluid inside the stuffing box away from the two annular sealing elements 11 and 12, providing in practice the theory known generally as "conical stuffing box", according to which if the stuffing box, i.e., the seat typically intended for a packing, is frustum-shaped, the recirculation of fluid tends to move dirt away from the seal.

In particular, the conical apex angle of the internal surface 18 is approximately 9°.

The first annular sealing element 11 is arranged within the flange 15 and has a smaller axial space occupation than the flange 15.

The first annular sealing element 11 is constituted by a central body 19 which has a frustum-shaped internal surface 18, by a ring 20 for coupling to the flange 15, and by a terminal annular portion 21, the end of which defines the stationary sealing face 13.

The first sealing element 11 is rigidly coupled to the flange by means of rotation-preventing blocks 22, which are inserted in corresponding holes 23 provided in an internal shoulder 24 of the flange 15, which faces the coupling ring 20, and in corresponding forks 25 provided on the coupling ring 20.

Springs 26 for pushing the first sealing element 11 against the second sealing element 12 are interposed between the ring 20 and the shoulder 24.

The outer surface 27 of the central body 19 of the first annular sealing element 11 is in contact with the internal surface 28 of the flange 15 by interposing a first O-ring 29 or other equivalent sealing means.

The second rotating annular sealing element 12 has a substantially rectangular cross-section, with an annular slot 30, provided on the face that lies opposite the rotating sealing face 14, for accommodating a second O-ring 31 or other equivalent sealing means adapted to support the second sealing element 12 on a corresponding collar 32 which protrudes axially from the outer annular element 16 toward the inside of the flange 15.

The collar 32 is indeed surrounded with clearance by the second annular sealing element 12.

The two O-rings 29 and 31, the springs 26 and the forks 25 in which the blocks 22 are free to move in a radial direction allow the annular sealing elements 11 and 12 a certain freedom to move with respect to each other while keeping the sealing faces 13 and 14 in mutual contact, in addition to the possibility for both to follow axial and radial vibrations of the rotating shaft 17 and radial misalignments thereof.

Further, the conical surface 18 and the recirculation region formed thereby prevent the dirt of the fluid of the stuffing box to penetrate to the sealing faces 13 and 14, slowing the accumulation of debris and dirt and slowing the wear of the coupling, ultimately improving the performance and life of the mechanical seal 10 according to the invention.

The outer annular element 16 is rigidly coupled to the shaft 17 by means of threaded elements 33, for example grub screws, which are screwed radially through the outer annular element 16 until they press against the surface 34 of the shaft 17.

In this manner, the outer annular element 16 locks the second rotating annular sealing element 12 against the first annular sealing element 11, which is static and rigidly coupled to the flange 15.

The inner cylindrical surface 35 of the outer annular element 16 has an annular slot 36 for a corresponding O-ring 37 or other equivalent sealing means adapted to be pressed against the outer surface 34 of the shaft 17 so as to apply a static seal which prevents the fluid of the stuffing box to exit, penetrating in the clearance between the shaft 17 and the outer annular element 16.

Therefore, the mechanical seal 10 according to the invention does not have an element such as the bush of the known seal cited above.

This absence of such an element allows to have a seal which is axially and radially more compact and has a lower cost; these advantages allow to reduce importantly the dimensional constraints during design.

The figures also show the means for locking the outer annular element 16 during the fitting of the seal 10.

Jaws 36 which are fixed in opposition in pairs and are fixed to the outer annular element 16 by way of screws 17 are shown by way of example.

In practice it has been found that the invention thus described solves the problems described above in known types of mechanical seal.

In particular, the present invention provides a mechanical seal which is more compact both axially and radially and is easier to provide even on stuffing boxes which are in use and are not appropriately shaped complementarily.

Moreover, the present invention provides a mechanical seal which is capable of keeping unchanged the qualities of adaptability to radial and axial vibrations of the shaft by way of the particular protection of the annular sealing elements determined by the frustum-shaped internal surface of the first annular sealing element.

Moreover, the present invention provides a mechanical seal whose efficiency, effectiveness and duration are not lower than those of known types of seal.

Moreover, the present invention provides a mechanical seal which is structurally simpler, can be manufactured with lower costs than known seals, and can be provided cheaply with known systems and technologies.

In practice, the materials employed, so long as they are compatible with the specific use, as well as the dimensions, may be any according to requirements and to the state of the art.

The disclosures in Italian Patent Application No. PD2006A000192 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A dynamic mechanical seal, **characterized in that** it comprises two annular sealing elements (11, 12) which are pressed against each other and are in contact by means of two corresponding sealing faces (13, 14), a first static annular sealing element (11), rigidly coupled to a supporting flange (15) which is fixed to the body of the machine with which the mechanical seal is associated, said first annular sealing element (11) being directed toward a stuffing box arranged inside the machine body and forming the stationary face (13) of said two sealing faces, and a second rotating annular sealing element (12), which forms the rotating face (14) and is rigidly coupled to an external annular element (16), which in turn is fixed to a rotating shaft (17), which exits from said machine body and from said stuffing box, said outer annular element (16) being externally adjacent to the flange (15) and to the machine body, said first annular sealing element (11) having a substantially frustum-shaped internal annular surface (18) which faces the rotating shaft (17), with a radius which is greater on the side of a stuffing box and a radius which is smaller proximate to the second adjacent annular sealing element (12), said frustum-shaped surface (18) being adapted to form a region for the recirculation of fluid inside the stuffing box away from said two annular sealing elements (11, 12).

2. The mechanical seal according to claim 1, **characterized in that** said first annular sealing element (11) is arranged within the flange (15) and has a smaller axial space occupation than said flange (15).

3. The mechanical seal according to one or more of the preceding claims, **characterized in that** said first annular sealing element (11) is constituted by a central body (19) with a frustum-shaped internal surface (18), by a ring (20) for rigidly coupling to the flange (15), and by a terminal annular portion (21), the end of which forms said stationary sealing face (13).

4. The mechanical seal according to claim 3, **characterized in that** said first sealing element is rigidly coupled to said flange by way of rotation-preventing blocks (22), which are inserted in corresponding holes (23) provided on an internal shoulder (24) of the flange (15) which faces said coupling ring (20), and in corresponding forks (25) provided on said coupling ring (20), springs (26) for pushing the first sealing element (11) against said second sealing element (12) being provided between said ring (20) and said shoulder (24), the external surface (27) of said central body (18) being in contact with the internal surface (28) of said flange (15) by interposition of an O-ring (29) or other equivalent sealing means.

5. The mechanical seal according to one or more of the preceding claims, **characterized in that** said second rotating annular sealing element (12) has a substantially rectangular cross-section, with an annular slot (30), provided on the opposite face with respect to said rotating sealing face (14), for accommodating an O-ring (31) or other equivalent sealing means, adapted to support said second sealing element (12) on a corresponding collar (32) which protrudes axially from said outer annular element (16) toward the inside of the flange (15), said collar (32) being indeed surrounded with clearance by the second annular sealing element (12).

6. The mechanical seal according to one or more of the preceding claims, **characterized in that** said outer annular element (16) is rigidly coupled to said shaft (17) by way of threaded elements (33) which are screwed radially through said outer annular element (16) until they press against the surface (34) of the shaft (17).

7. The mechanical seal according to one or more of the preceding claims, **characterized in that** the inner cylindrical surface (35) of the outer annular element (16) has at least one annular slot (36) for a corresponding O-ring (37) or other equivalent sealing means, which is adapted to be pressed against the outer surface (34) of said shaft (17).
